# EUROPEAN PATENT SPECIFICATION

(11) **EP 2 163 416 B1**
(45) Date of publication and mention of the grant of the patent: **05.06.2013**
(21) Application number: 09170297.7
(22) Date of filing: 15.09.2009
(51) Int. Cl.: B60J 1/04, B60Q 1/26, B60Q 1/24, B60Q 1/04

(54) **A cabin window assembly**
Kabinenfensteranordnung
Ensemble de fenêtre de cabine

(30) Priority: 16.09.2008 IT BO20080567
(43) Date of publication of application: 17.03.2010
(73) Proprietor: CNH Italia S.p.A., 10135 Torino (IT)
(72) Inventor: Toso, Marco, CAP10121, Turin (IT); Ferrero, Paolo, CAP10148, Turin (IT)
(74) Representative: Gunst, Wilfried E.D.

(56) References cited:
- DE-U1- 20 304 086
- FR-A- 2 744 979
- US-A- 3 647 257
- US-A- 4 023 030
- US-A- 4 518 195

## Description

This invention relates to a window assembly, of a cabin.

Cabins are encountered in numerous locations. Well-known examples include cabins used by the operators of machines such as ground vehicles, boats, ships, hovercraft, aircraft and cranes. Each of these types of vehicle / machine may take any of a variety of forms.

In many examples of cabins it is strongly desirable to include at least one openable window. The advantages of openability of windows of cabins are more or less self-evident, and numerous window designs have been proposed in the prior art.

Known sliding and winding cabin windows are sub-optimal when employed in cabins in which equipment (such as control members and/or a display panel) lies between an operator and an openable window since it is awkward then for the operator to gain enough purchase to operate the windows. Sliding windows furthermore are troublesome since the tracks in which panes of glass slide in order to provide the opening effect can become clogged with dirt and debris; and it is difficult to make a sliding window in a cabin seal effectively against the ingress of contaminants and bad weather.

Partly for these reasons, in many cabin designs it has become the norm to provide a hinged window.

Typically, although not always, such a window hinges along an upper edge of a rectangular aperture such that in order to open the window an operator within a cabin needs merely to push the window with his hand (having released a latch that may be operated remotely). When using such a hinged window there is no need for the operator to manipulate a sliding window pane or a window winder.

The provision of a hinge along the upper edge of a window pane is beneficial when the cabin is part of a vehicle since when the window is fully open it protrudes horizontally at a height above eg. the head height of individuals in the vicinity of the cabin. This, in contrast with a window pane that hinges along an upright edge, means that an open window is unlikely to present a personal injury hazard.

Furthermore when the cabin forms part of a moveable vehicle movement of the vehicle over rough terrain may cause the window pane to fall under gravity thereby tending to close the window and prevent a potentially undesirable situation (of a vehicle advancing with the window open) from arising.

When a cabin forms part of a moveable machine such as various ground vehicles, cranes, aircraft and watercraft, it is commonplace to mount accessories on the exterior of the cabin.

A wide variety of such components may be so located. Of these, many (such as lamps, antennae, cameras and other optical or audio devices) are directionally sensitive in the sense that their functioning is impeded or even reduced to zero if they do not point in a predetermined direction.

In this regard a good example is a cab-mounted lamp secured to the cabin of eg. an agricultural vehicle such as a tractor, harvesting machine, loader or multi-purpose farm vehicle. In a field condition the primary purpose of such a lamp is to illuminate the field in front of or behind the vehicle in order to provide for safe operation at night or in poor visibility conditions. Clearly it is important for such a lamp to remain pointing at the ground in front of or behind the vehicle at all times.

A trend in recent years in the designs of cabins of various kinds has been to increase the available glazed area such that an operator in the cabin may enjoy good visibility all around him.

This trend has led to cabin designs in which transparent glazing materials (such as various glasses, polymer combinations and mixes thereof) extend from approximately the waist height of the operator in the cabin, to virtually the top of the cabin body.

Such arrangements discourage the mounting of accessories such as lights and other components of the kind indicated above on the edge of the cabin roof (since, quite simply, there is insufficient thickness of material satisfactorily to support the accessories). Furthermore it is generally undesirable to secure accessories on the top of a vehicle cabin roof since then there is an increased chance of damage to or loss of the accessory occurring in headroom-related accidents. Also, often governmental regulations prescribe the maximum allowable height of the agricultural vehicle. It is very important to design the cabin of the vehicle such that this maximum allowable height is not exceeded, while at the same time providing the best possible visibility for the driver and permitting opening of the windscreen. However, great care should be taken to minimize the additional components needed while still permitting safe attachment of the accessories such as headlamps or work lamps. An additional relevant construction requirement is to achieve easy assembly of an entire component structure or assembly onto existing cabin designs without the need for complex manufacturing procedures and/or adapters.

Partly for the foregoing reasons, in particular in the case of agricultural vehicles in recent years it has become known to mount accessories such as lamps directly to the leaves of the hinges that support openable windows in the vehicle cabins.

Such arrangements are advantageous when the cabin windows are closed since they present the accessories at approximately the head height of the operator of a vehicle, pointing in the correct direction for use.

However on opening of a window, such as that described above, having a hinge along its upper edge any accessories secured to the leaf of the hinge rotate with the window pane as it moves to its open position. After only a comparatively small amount of opening of the window the accessories may as a result be pointing in a direction that is largely or entirely useless for their intended functioning.

Furthermore, the mounting of accessories onto the hinge members has caused the sizes of the hinge leaves to be increased by designers in order to support the masses of the accessories in addition to the masses of any window panes. Such enlarged hinge parts however can obscure the line of sight of an operator; and can induce stresses that cause premature failure of the openable window panes.

US 3,647,257 discloses a vehicle body with a rear access opening, a suitable door comprising a window mounted on the vehicle roof by a hinge and means to mount a vane, for directing air over the window. Said means permitting translational movement of the vane with respect to either the vehicle body or the vehicle door when the door is pivoted.

FR 2 744 979 discloses a tipping mechanism for a rear window consisting of a deformable parallelogram.

US 4,023,030 discloses a headlight mount for a mine vehicle. The headlight is mounted for sliding inwardly behind the scoop when a lateral obstruction is encountered but is biased to its outer position. An obstruction-engaging bumper link pushes the headlight inwardly. A linkage keeps the headlight beam horizontal when the scoop tilts.

According to the invention in a first aspect there is provided a window assembly according to claim 1.

The use of a kinematic four-bar chain as part of the hinge mechanism of the window assembly advantageously means that the mass of an accessory may be efficiently supported at a convenient location on or close to an openable window panel; yet on opening of the panel the accessory (although it may move by reason of motion of the elements of the four-bar chain) may be arranged to continue pointing in the same direction as when the window panel is shut, thereby avoiding the reduction in utility of the accessory that commonly arises in the prior art.

In more detail, the four-bar kinematic chain is a closed chain comprising first, second, third and fourth elements hingedly connected in series one to another, the first element being secured to the window panel; the second element being secured to a perimeter member and interconnecting the first and third elements, the third element interconnecting the second and fourth elements, and the fourth element interconnecting the first and third elements, the or each accessory being pivotably secured to the pivot between the third and fourth elements and being also pivotably secured to the first element.

It follows that the first and second elements of the four-bar chain act essentially in the manner of conventional hinge leaves in supporting the window panel relative to a rigid part of the perimeter of the aperture. The third and fourth elements of the chain in effect serve to support the or each accessory on the hinge mechanism in a fashion that is spaced from the window panel (and such that rotation of the window panel between its closed and open positions does not cause rotation of the accessory/ies).

Typically on moving of the window panel between its closed and open positions (or vice versa) some movement of the accessory would occur; but this would not amount to any substantial change in the orientation of the accessory, such that it continues to point at all times in the same direction.

Since the or each accessory is supported spaced a certain distance from the window panel it is not necessary for a designer of the window assembly to the invention to construct the hinge leaves that support the window panel relative to the aperture as large, robust items. The forces generated by supporting of the accessories may be reacted through other elements of the four-bar chain such that overall the encroachment of the hinge mechanism of the window assembly into the line of sight of an operator is kept to a minimum.

Preferably the window assembly includes one or more length-adjustable struts interconnecting the window panel and the cabin such that over a major part of the distance moved by the window panel between the closed and open positions or vice versa the or each strut provides a reaction force that tends to maintain the window panel in a position between the closed and opened positions.

To this end therefore in a practical embodiment of the invention the force needed for the complete kinematic movement will be fully carried by the two gas struts that are usually provided in eg. agricultural vehicle cabins for the windscreen motion and its stable retention at opening position.

Preferably each element of the four-bar kinematic chain is hingedly connected at each end to another said element.

Hingedly connecting the elements at their ends to one another leads to an arrangement in which the beneficial effects indicated above are maximised.

According to the invention the first, second and fourth elements of the four-bar chain are generally straight; and the third element is bent at two locations to define three element portions, the direction of bending of the third element reversing at each said location.

This arrangement is particularly beneficial since it allows one side of the four-bar chain to be offset a short distance relative to the line it would take if its element was straight. This in turn provides for a force transmission path between the second and fourth elements such that on opening of the window panel the accessory is driven in a complex locus that results in some "*translational*" movement but no rotational movement.

Conveniently the first element includes a protuberance that protrudes via an aperture formed in the window panel to permit securing of the first element and the panel together. The protuberance may in practical embodiments of the invention be associated with a boss or other load-spreading formation. Nonetheless the protuberance needs to overlie the window panel in only a small area, thereby minimising the impediment to visibility caused by the hinge mechanism.

Optionally the second element is elongate and includes rotatably secured so as to extend along its length a hinge pin to which the first element is secured.

This arrangement is advantageously robust in securing the window panel in a rotatable fashion.

It is further desirable that the window assembly includes one or more fasteners securing the second element and a perimeter member rigidly together.

Any of a range of fasteners that will be known to the skilled worker is likely to be suitable. The precise fastener design may be chosen in dependence on the materials of the components of the window assembly.

In the majority of practical embodiments of the window assembly of the invention the window panel is constituted as a pane of a rigid, transparent material such as glass, Plexiglas a polycarbonate material or a transparent composite material.

It is however conceivable that the window panel may be opaque or may transmit light only in a very narrow range of wavelengths.

The hinge assembly of the invention therefore is suitable for use in cabins that are exposed to extreme environments that may arise for example in the vicinity of furnaces or, for example, where large-scale electric arc welding, requiring careful optical shielding, takes place.

Preferably, the cabin is a vehicle cabin and in particular the cabin of an agricultural, haulage, construction or ground vehicle, a boat, a ship, a hovercraft, an aircraft or a crane. The invention therefore resides in a window assembly when configured for installation in any of the aforesaid vehicle types.

According to a second aspect of the invention there is provided a method, of mounting or assembling a window assembly as defined herein comprising the steps of:
1) assembling one or more four-bar chain sub-assemblies as described herein;
2) mounting the or each four-bar chain sub-assembly onto a window panel using one or more panel fasteners;
3) mounting one or more lamps (or other accessories) onto each four-bar chain sub-assembly;
4) securing the window panel and each mounted four-bar chain sub-assembly onto a cab frame using the one or more fasteners for securing the second element of the four-bar chain and the perimeter member together;
5) adjusting the window panel and four-bar chain sub-assembly into the frame aperture;
6) opening the window panel and tightening the or each panel fastener;
7) mounting one or more length-adjustable struts so as to interconnect the window panel and the cab frame.

Conveniently the Step 5) includes closing the window panel and adjusting one or more connection means such that the window panel is aligned with the frame aperture.

It is also preferable that Step 6) includes tightening in turn upper and lower said fasteners securing the second element and the perimeter member together.

There now follows a description of preferred embodiments of the invention, by way of non-limiting example, with reference being made to the accompanying drawings in which:
Figure 1 is a perspective view of part of a window assembly, in accordance with the invention, showing a window panel forming part of the assembly in a closed position;
Figure 2 is a similar perspective view to that of Figure 1, showing the configuration of the components of the window assembly when the window panel is in an open position;
Figures 3 and 4 respectively are side elevational views of the window assembly components in the configurations shown in Figures 1 and 2; and
Figure 5 is a detailed, perspective view of the main components of the hinge mechanism forming part of the window assembly of Figures 1 to 4.

Referring to the drawings, a window assembly 10 is shown forming part of a cabin of eg. an agricultural vehicle such as a tractor. A portion 11 of the roof of the cabin is visible in the drawings. The cabin defines an aperture the perimeter of which is partly visible in the figures and labelled by numeral 12.

In the embodiment shown, the perimeter of the aperture 13 is defined by a single moulding that forms the superstructure of the cabin. In other embodiments in accordance with the invention the perimeter 12 could be formed differently, for example through assembling together of a series of interconnected frame members.

A window panel 14, that in the embodiment shown is a transparent sheet of eg. glass coated with a film that resists ultraviolet light, is supported relative to the aperture 13 by a hinge mechanism that is described in more detail below.

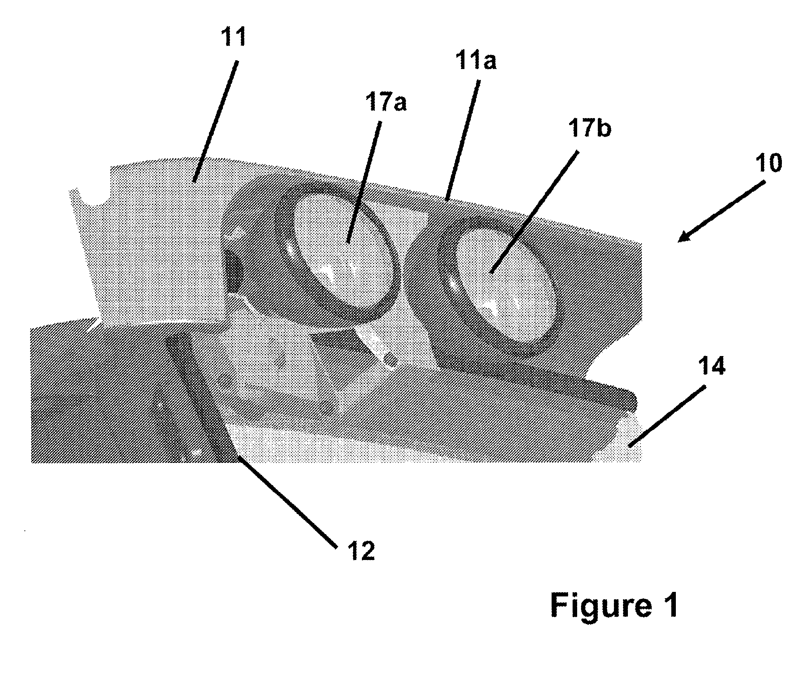

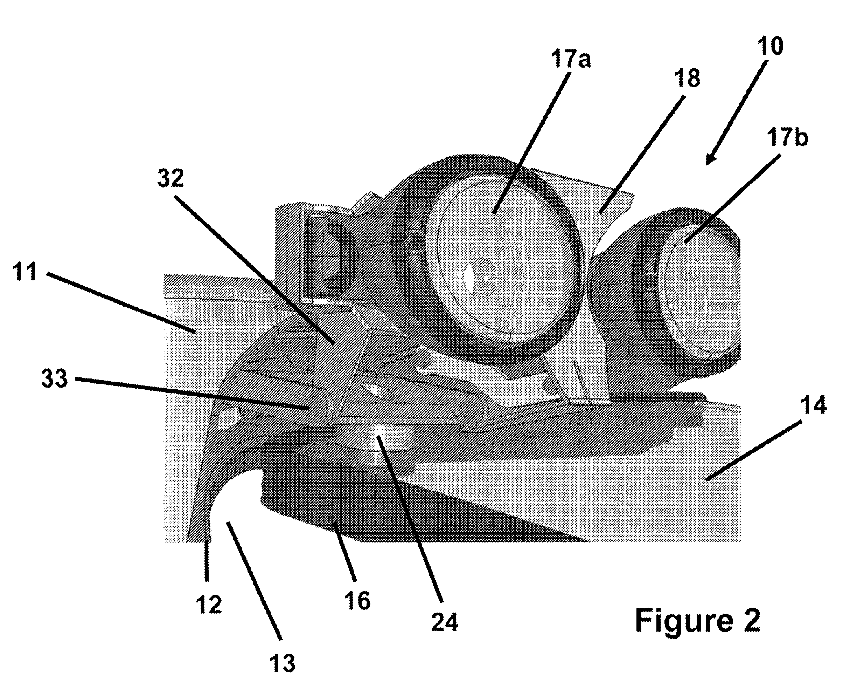

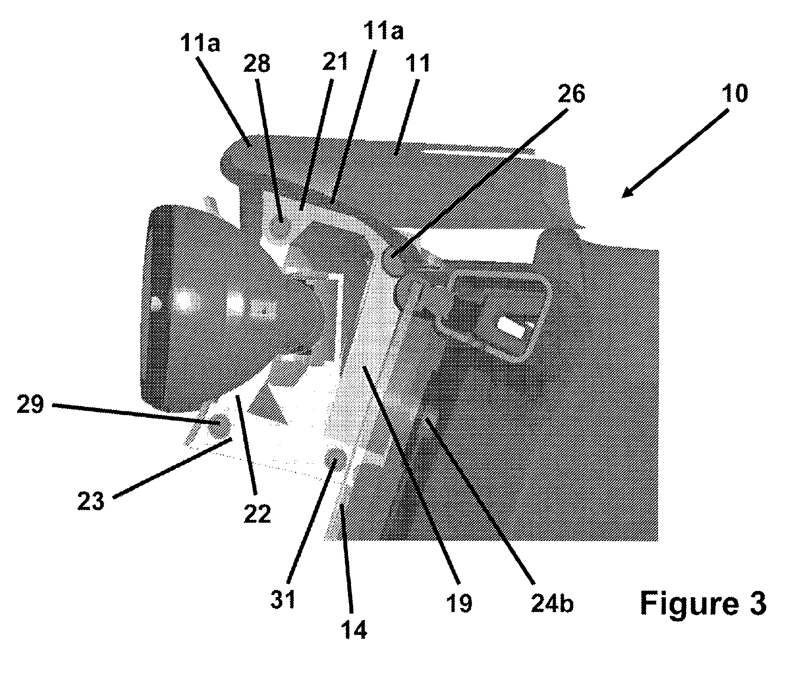

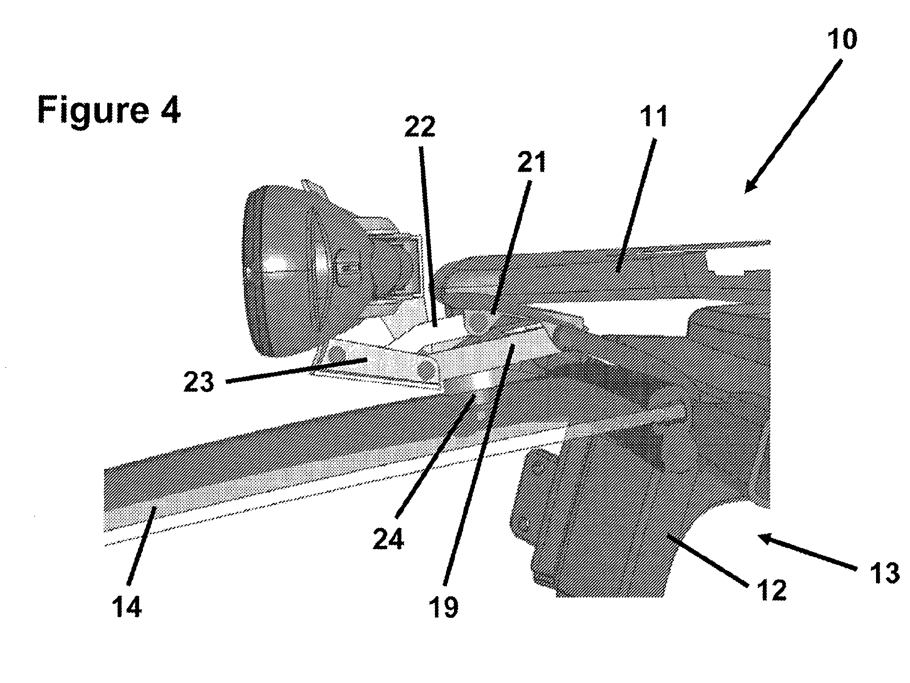

The hinge mechanism 13 supports the window panel for rotational movement between a position, as shown in Figures 1 and 3, in which the window panel 14 closes off the aperture 13; and an open position (shown in Figures 2 and 4) in which the window panel 14 is spaced from the perimeter 12 of the aperture 13.

Typically there would be provided one or more length-adjustable struts (such as but not limited to gas struts) interconnecting the window panel 14 and a rigid part of the cabin adjacent the perimeter 12. Such struts are known *per se* and operate to make the mass of the window panel 14 and any accessories supported thereby in a manner described below appear "*neutral*". In other words the supporting forces provided by the strut(s) are sufficient, over the major part of the distance between the closed and open positions of the window panel 14, for the panel 14 to appear substantially "*massless*". This means that the panel will tend to remain in an open position to which it is pushed by an operator, until it is subjected to a further, intentional force adjusting its position. Aside from the benefit such an arrangement provides of preventing the window panel 14 from moving uncontrolledly during movement of the cabin it also reduces the effort needed on the part of the operator to open and close the window.

As is known in the art the strut(s) can be arranged such that when the window panel 14 is close to its fully closed position the transmission angle between each strut and the cabin is a small, acute angle. Under such circumstances only a small proportion of the strut forces is transmitted to the window panel. At such a time therefore the mass of the window panel and the supported accessories exceeds the forces provided by the struts. In consequence the window panel may be arranged to be "*self-closing*" when it is close to its fully closed position; and "*massless*" over the remainder of its movement.

In Figures 2 and 4 the window panel 14 is shown fully open, ie. extending forwardly and almost horizontally from the upper edge of the aperture 12; but as used herein "open" means any of the non-closed positions of the window panel 14 that it may adopt in moving between the configurations shown in Figures 1 and 2 for example.

As is apparent from study of Figures 1 to 4, the motion of the window panel 14 between closed and open positions is essentially rotational, the rotation occurring about an axis that is spaced a short distance from the perimeter 12 outwardly of the aperture 13.

In the embodiment shown, the window panel 14 includes a rubberised or similarly resiliently deformable sealing member 16 extending about its periphery on its side that lies adjacent perimeter 12.

The sealing member 16 protrudes towards the perimeter 12 from the window panel 14 such that when the latter occupies its closed position the sealing member 16 is compressed so as to form an at least weatherproof seal between the window panel 14 and the perimeter 12. In certain embodiments of the invention however more resistant sealing arrangements, as will be known to the worker of skill in the art, may be required. Such embodiments may be of use in harsh or chemically hazardous environments.

Compression of the sealing member 16 against its resilient deformability provides a reaction force for eg. a catch or lock that may be operated to secure the window panel 14 in its closed position.

The lock is not visible in the drawings but may take any of a range of forms. In particular, the lock or catch may be of a type that is operable remotely eg. through activation of a control member forming part of a control panel or dashboard within the cabin.

The hinge mechanism, described in more detail below, as indicated above supports one or more accessories. In the particular embodiment shown in the drawings the accessories take the form of a pair of electric (eg. gas discharge or filament) lamps 17a, 17b that are mounted to illuminate the ground eg. in front of or behind (depending on whether the window panel 14 is a front window panel or a rear window panel) of the tractor or other vehicle in which the window assembly 10 is installed. As has been explained above, it is important for such lamps to maintain a chosen orientation (so as continuously to illuminate the ground) even when the window panel 14 is opened.

The hinge mechanism by means of which the window panel is supported relative to the aperture 13 includes a four-bar kinematic chain (described in more detail below) on a part of which the lamps 17a, 17b are supported in a bracket 18 in side-by-side fashion as shown. The bracket 18 is shaped including adjacent cup-like formations that accommodate the bowls of the lamps 17a, 17b.

The lamps in the embodiment shown are typical of the electric lamps encountered nowadays in vehicles. Thus they may be eg. filament or gas-discharge lamps whose operation is controlled by the setting of a control switch or lever located in the cabin; or by a light-sensitive switch (diode) that is exposed to ambient light in the vicinity of the cabin, such components being connectable to the lamps 17a, 17b by way of a CAN-BUS or other control arrangement known to the worker of skill in the art.

The lamps may however be of different types and as noted herein the accessories need not be lamps at all. In such cases, all of which fall within the scope of the invention, the bracket 18 and as necessary other parts of the window assembly would be modified to accommodate the shape of the accessory in question.

Bracket 18 is mounted on parts of the four-bar chain that, through judicious design, may be caused on movement of the window panel 14 to move translationally without rotating to any appreciable extent.

The four-bar chain is a closed chain comprising first, 19, second, 21, third, 22 and fourth, 23 elements, each element 19, 21, 22, 23 being rigid and hingedly connected at each end to another of the elements so as to define the closed kinematic chain.

The first element 19 is a substantially straight, rigid member manufactured eg. as a metal pressing or from a lightweight composite material and is secured rigidly to the window panel 14.

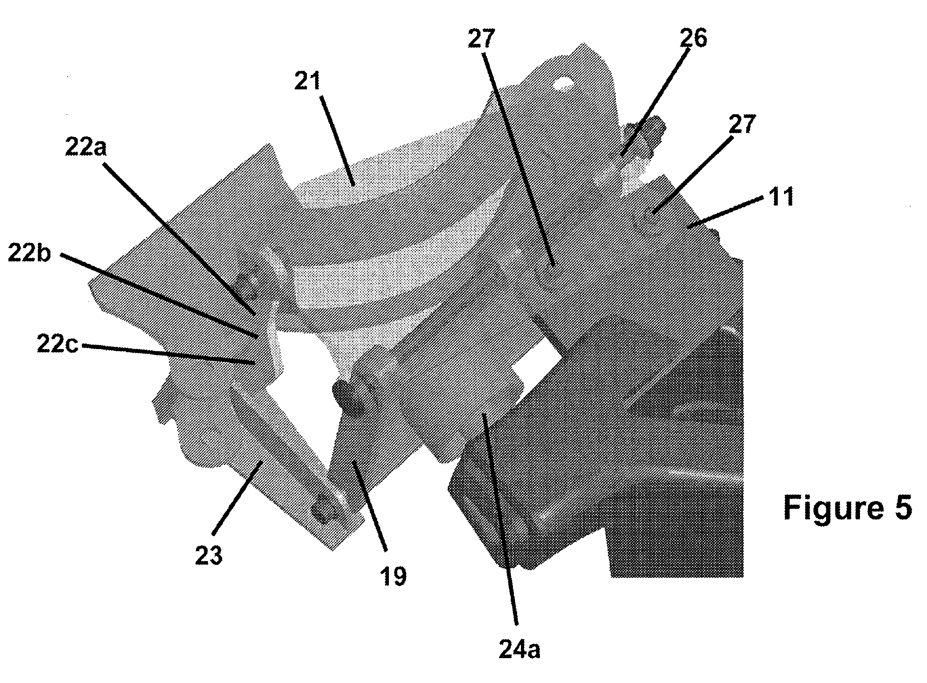

This is in the embodiment shown achieved by way of a protuberance 24, that in the preferred embodiment is or includes a stud 24a (Figure 5), in combination with fastener 24b, the stud being threaded and being arranged to pass through a circular aperture formed in the window panel such that the fastener (that in the example shown is a nut, but that could take many other forms) may be screwed onto the stud from the side of the window panel that faces the interior of the cabin.

Such an arrangement is efficient in providing a fastening arrangement that induces minimal stressing of the window panel whilst providing a rigid mounting that does not encroach excessively into the viewing area.

The first element 19 extends generally vertically when the window panel 14 occupies its closed position. At the thus-defined upper end of the window panel 14 the second element 21 is hingedly connected to the first element 19, by way of a hinge pin 26.

As is best shown in Figure 5, hinge pin 26 extends horizontally along a length of the upper edge of the window panel 14 such that the first element 19 is hingedly suspended downwardly from hinge pin 26.

Second element 21 is secured rigidly eg. by way of stud or other fastenings 27 to the roof portion 11 so as to extend outwardly along a brim 11a defined thereby. Second element 21 therefore is immobile relative to the roof 11 and hence the remainder of the cabin of which the roof portion 11 forms part.

Second element 21 also is substantially straight, being formed (eg. as a metal pressing) with a pair of ears at either end that act as reinforcements for pivotable mounting points of the first 19, and third 22 elements.

Third element 22 extends downwardly from the end of second element 21 that is remote from hinge pin 26 when the window panel 14 occupies its closed position. Third element 22 is hingedly secured to second element 21 by way of a pin joint 28.

Third element 22 is, as illustrated in Figure 5, made up (eg. by pressing from metal) of three portions 22a, 22b, 22c. The three element portions 22a, 22b, 22c are each straight. Element portion 22b however is bent away from element portion 22a in a direction extending towards the window panel 14; and element portion 22c is bent in an opposition direction such that, overall, third element 22 adopts a somewhat sinuous appearance.

Fourth element 23 is hingedly secured at the lowermost end of third element 22 and hingedly interconnects third element 22 and first element 19 by way of further pin joints 29, 31. In like manner to the elements 19, 21 and 22 fourth element 23 also typically but not necessarily would be pressed from metal.

It will be apparent therefore that by reason of the rigid securing of the window panel 14 to the first element 19 and the rigid securing of the second element 21 to the roof portion 11 that on movement of the window panel 14 away from the aperture 13 (as represented by the change in position between Figures 1 and 2) the window panel will pivot about the hinge pin 26 whilst simultaneously causing the third and fourth elements 22, 23 to move in the manner of a parallelogram mechanism.

The bracket 18 is secured to the above-described hinge mechanism pivotably at two locations.

The first of these is at the lowermost extent of the first element 19. This is shown in Figure 2 in which a frustoconical plate 32 is shown formed as a downward extension of the portion of bracket 18 that supports the lamps 17a, 17b (or other accessories if present).

At its lowermost end, frustoconical plate 32 is hingedly secured by way of a further pin joint 33 to first element 19.

Bracket 18 also includes a portion extending downwardly for pivotal securing at pin joint 29 to the junction between the third and fourth four-bar chain elements 22, 23.

The result of this arrangement is that the parallelogram motion of the four-bar chain as the window panel rotates between the closed and open positions causes the bracket 18, and hence any accessory supported thereby, to move in a locus that (as best illustrated by comparing Figures 1 and 2) involves movement in an outward direction relative to the roof portion 11 and hence the entire cabin, without any rotation of the bracket 18 occurring. This is so even though the window panel 14 rotates between its closed and open positions.

When the window panel 14 is closed the motion of the bracket 18 and attached accessory is reversed so that the accessory moves from the position shown in Figure 2 to the position shown in Figure 1, again without reproducing the rotative motion of the window panel 14 during this time.

It will thus be apparent that the window assembly of the invention permits eg. a lamp such as lamp 17, a camera or any other accessory whose functioning is determined by the direction in which it points to be successfully mounted so as to meet the aims of the invention as stated herein.

As explained, the window panel may take any of a range of forms and need not be transparent nor need it be suspended from its upper edge. In an alternative arrangement the window panel could be for example hinged along an upright edge. In such a case the hinge mechanism described herein and forming part of the invention would be mounted in an orientation that is canted at 90° relative to that shown; but in other respects would be similar.

When assembling the construction to the cab, following steps are needed:
1) assembling one or more four-bar chain sub-assemblies as described herein;
2) mounting the or each four-bar chain sub-assembly onto a window panel using one or more panel fasteners;
3) mounting one or more lamps (or other accessories) onto each four-bar chain sub-assembly;
4) securing the window panel and each mounted four-bar chain sub-assembly onto a cab frame using the one or more fasteners for securing the second element of the four-bar chain and the perimeter member together;
5) adjusting the window panel and four-bar chain sub-assembly into the frame aperture;
6) opening the window panel and tightening the or each panel fastener;
7) mounting one or more length-adjustable struts so as to interconnect the window panel and the cab frame.

When using the above described assembly sequence, it is possible to disassemble the entire construction without the need to remove the roof package from the cab frame, which increases the ease to perform service to the construction.

In practice the panel fasteners are constituted by upper and lower screws or nut and bolt combinations for each of the four-bar chains. The Step 6) of tightening the panel fastenings following opening of the window therefore in the preferred method of the invention is a two-step process involving tightening firstly the upper fastening and then the lower one (or, in certain versions of the invention, vice versa).

The Step 5) of adjusting the window (eg. windscreen) panel on the other hand in a preferred version of the method of the invention involves closing the window panel and adjusting one or more connection means such that the window panel is aligned with the frame aperture. The connection means provided in the preferred embodiment are threaded bosses which are able to adjust the position of the windscreen up- and downwardly and in "cross-car" directions. The adjustments in the fore-and aft directions are accomplished by providing a chosen degree of compression of the windscreen gasket when the window panel is installed onto the cabin aperture. This may be achieved by adjusting the degree of tightening of the various panel fasteners.

## Claims

1. A window assembly (10), of a cabin, comprising a window panel (14) that is supported relative to a window aperture (13) defined by one or more perimeter members (12) fixed to or forming part of the cabin, the window panel (14) being rotationally moveable between a closed position in which it closes the aperture (13) and an open position of the aperture (13); a hinge mechanism interconnecting the window panel (14) and a perimeter member (12); one or more accessories (17a, 17b) supported on the hinge mechanism, said hinge mechanism further including a four-bar kinematic chain (19, 21, 22, 23) that generally maintains an orientation of the or each accessory regardless of the rotational position of the window panel (14) between the closed and open positions, wherein the four-bar kinematic chain is a closed chain comprising first (19), second (21), third (22) and fourth (23) elements hingedly connected in series one to another, the first element (19) being secured to the window panel (14); the second element (21) being secured to a perimeter member (12) and interconnecting the first (19) and third (22) elements, the third element (22) interconnecting the second (21) and fourth (23) elements, and the fourth element (23) interconnecting the first (19) and third (22) elements, the or each accessory (17a, 17b) being pivotably secured to the pivot between the third (22) and fourth (23) elements and being also pivotably secured to the first element (19); and
**characterized in that** the first (19), second (21) and fourth (23) elements of the four-bar chain are generally straight; and the third element (22) is bent at two locations to define three element portions (22a, 22b, 22c), the direction of bending of the third element (22) reversing at each said location.

2. A window assembly (10) according to claim 1, wherein the or each accessory (17a, 17b) is mounted on a bracket (18) being pivotably secured to the pivot between the third (22) and fourth (23) elements and being also pivotably secured to the first element (19).

3. A window assembly (10) according to any preceding claim, including one or more length-adjustable struts interconnecting the window panel (14) and the cabin such that over a major part of the distance moved by the window panel (14) between the closed and open positions or vice versa the or each strut provides a reaction force that tends to maintain the window panel (11) in a position between the closed and opened positions.

4. A window assembly (10) according to any of any of the preceding claims, wherein each element (19, 21, 22, 23) of the four-bar kinematic chain is hingedly connected at each end to another said element.

5. A window assembly (10) according to any of the preceding claims, wherein the first element (19) includes a protuberance (24) that protrudes via an aperture formed in the window panel (14) to permit securing of the first element (19) and the panel (14) together.

6. A window assembly (10) according to any of the preceding claims, wherein the second element (21) is elongate and includes rotatably secured so as to extend along its length a hinge pin (26) to which the first element (19) is secured.

7. A window assembly (10) according to any of the preceding claims, including one or more fasteners (27) securing the second element (21) and a perimeter member (12) rigidly together.

8. A window assembly (10) according to any preceding claim, wherein the window panel (14) is or includes a pane of a rigid, transparent material.

9. A window assembly (10) according to any preceding claim wherein the accessory includes one or more lamps (17a, 17b) supported on the hinge mechanism and connected for operation in dependence on one or more control commands generated in dependence on the setting of one or more control devices enclosed by or operatively connected to the cabin.

10. A window assembly (10) according to Claim 10 when configured as the front, rear or side window of the cabin of an agricultural, haulage, construction or military ground vehicle, a boat, a ship, a hovercraft, an aircraft or a crane.

11. A method of installing a window assembly, as defined in any preceding claim, **characterized in that** it comprises the steps of:
1) assembling one or more four-bar chain sub-assemblies as described herein;
2) mounting the or each four-bar chain sub-assembly onto the window panel using one or more panel fasteners;
3) mounting one or more lamps or other accessories onto each four-bar chain sub-assembly;
4) securing the window panel and each mounted four-bar chain sub-assembly onto a cab frame using the one or more fasteners for securing the second element of the four-bar chain and the perimeter member together;
5) adjusting the window panel and four-bar chain sub-assembly into the frame aperture;
6) opening the window panel and tightening the or each panel fastener;
7) mounting one or more length-adjustable struts so as to interconnect the window panel and the cab frame.

12. A method according to Claim 11 wherein Step 5) includes closing the window panel and adjusting one or more connection means such that the window panel is aligned with the frame aperture.

13. A method according to Claim 11 or Claim 12 wherein Step 6) includes tightening in turn upper and lower said fasteners securing the second element and the perimeter member together.

## Patentansprüche

1. Fensteranordnung (10) einer Kabine, mit einer Fensterscheibe (14), die gegenüber einer Fensteröffnung (13) gehaltert ist, die durch ein oder mehrere Umfangsteile (12) begrenzt ist, die an der Kabine befestigt sind oder einen Teil hiervon bilden, wobei die Fensterscheibe (14) drehbar zwischen einer geschlossenen Stellung, in der sie die Öffnung (13) verschließt, und einer offenen Position der Öffnung (13) bewegbar ist; mit einem Scharniermechanismus, der die Fensterscheibe (14) und einen Umfangsteil (12) miteinander verbindet; mit einem oder mehreren Zubehörteilen (17a, 17b), die an den Scharniermechanismus gehaltert sind, wobei der Scharniermechanismus weiterhin eine kinematische Viergelenk-Kette (19, 21, 22, 23) einschließt, die allgemein eine Ausrichtung jedes der Zubehörteile unabhängig von der Drehstellung der Fensterscheibe (14) zwischen den geschlossenen und offenen Stellungen aufrecht erhält, wobei die kinematische Vierstab-Kette eine geschlossene Kette ist, die erste (19), zweite (21), dritte (22) und vierte (23) Elemente umfasst, die gelenkig in Serie miteinander verbunden sind, wobei das erste Element (19) an der Fensterscheibe (14) befestigt ist, das zweite Element (21) an einem Umfangsteil (12) befestigt ist und die ersten (19) und dritten (22) Elemente miteinander verbindet, wobei das dritte Element (22) die zweiten (21) und vierten (23) Elemente miteinander verbindet und das vierte Element (23) die ersten (19) und dritten (22) Elemente verbindet, wobei das oder jedes Zubehörteil (17a, 17b) schwenkbar mit dem Schwenkpunkt zwischen den dritten (22) und vierten (23) Elementen verbunden ist und außerdem schwenkbar mit dem ersten Element (19) verbunden ist; und
**dadurch gekennzeichnet, dass** die ersten (19), zweiten (21) und vierten (23) Elemente der Viergelenk-Kette allgemein geradlinig sind und das dritte Element (22) an zwei Stellen gebogen ist, um drei Element-Teile (22a, 22b, 22c) zu bilden, wobei die sich Richtung der Biegung des dritten Elementes (22) an jeder Stelle umkehrt.

2. Fensteranordnung (10) nach Anspruch 1, bei der das oder jedes Zubehörteil (17a, 17b) an einem Haltebügel (18) befestigt ist, schwenkbar an dem Schwenkpunkt zwischen den dritten (22) und vierten (23) Elementen befestigt ist und außerdem schwenkbar an dem ersten Element (19) befestigt ist.

3. Fensteranordnung (10) nach einem der vorhergehenden Ansprüche, unter Einschluss von einer oder mehreren in ihrer Länge einstellbaren Streben, die die Fensterscheibe (14) und die Kabine derart verbinden, dass über einen größeren Teil der Strecke, die von der Fensterscheibe (14) zwischen den geschlossenen und offenen Stellungen oder umgekehrt durchquert wird, die oder jede Strebe eine Reaktionskraft liefert, die im Sinne eines Haltens der Fensterscheibe (11) in einer Position zwischen den geschlossenen und offenen Stellungen wirkt.

4. Fensteranordnung (10) nach einem der vorhergehenden Ansprüche, bei der jedes Element (19, 21, 22, 23) der kinematischen Viergelenk-Kette gelenkig an jedem Ende mit einem anderen der Elemente verbunden ist.

5. Fensteranordnung (10) nach einem der vorhergehenden Ansprüche, bei der das erste Element (19) einen Vorsprung (24) einschließt, der über eine Öffnung vorspringt, die in der Fensterscheibe (14) ausgebildet ist, um eine Befestigung des ersten Elementes (19) und der Fensterscheibe (14) aneinander zu ermöglichen.

6. Fensteranordnung (10) nach einem der vorhergehenden Ansprüche, bei der das zweite Element (21) langgestreckt ist und einen drehbar befestigten Scharnierbolzen (26) einschließt, der sich entlang seiner Länge erstreckt und an dem das erste Element (19) befestigt ist.

7. Fensteranordnung (10) nach einem der vorhergehenden Ansprüche, unter Einschluss von einem oder mehreren Befestigungsmitteln (27), die das zweite Element (21) und einen Umfangsteil (12) starr miteinander verbinden.

8. Fensteranordnung (10) nach einem der vorhergehenden Ansprüche, bei der die Fensterscheibe (14) eine Scheibe aus einem starren transparenten Material ist oder einschließt.

9. Fensteranordnung (10) nach einem der vorhergehenden Ansprüche, bei der das Zubehörteil eine oder mehrere Lampen (17a, 17b) einschließt, die an dem Scharniermechanismus gehaltert und für einen Betrieb in Abhängigkeit von einem oder mehreren Steuerbefehlen verbunden sind, die in Abhängigkeit von der Einstellung von einem oder mehreren Steuereinrichtungen erzeugt werden, die in der Kabine enthalten oder betriebsmäßig mit dieser verbunden sind.

10. Fensteranordnung (10) nach Anspruch 8, wenn diese als vorderes, hinteres oder Seitenfenster eines landwirtschaftlichen, Schlepp- oder militärischen Landfahrzeuges, eines Bootes, eines Schiffes, eines Hovercrafts, eines Flugzeugs oder eines Krans konfiguriert ist.

11. Verfahren zur Installation einer Fensteranordnung nach einem der vorhergehenden Ansprüche, **dadurch gekennzeichnet, dass** es die folgenden Schritte umfasst:
1) Zusammenbau von ein oder mehreren Viergelenk-Ketten-Teilbaugruppen, wie sie hier beschrieben werden;
2) Befestigen der oder jeder Viergelenk-Ketten-Teilbaugruppe an der Fensterscheibe unter Verwendung von ein oder mehreren Scheiben-Befestigungsmitteln;
3) Befestigen einer oder mehrerer Lampen oder anderer Zubehörteile auf der Viergelenk-Ketten-Teilbaugruppe;
4) Befestigen der Fensterscheibe und jeder montierten Viergelenk-Ketten-Teilbaugruppe auf einem Kabinenrahmen unter Verwendung des einen oder der mehreren Befestigungsmittel zur Befestigung des zweiten Elementes der Viergelenk-Kette und des Umfangsteils aneinander;
5) Ausrichten der Fensterscheibe und der Viergelenk-Ketten-Teilbaugruppe in der Fensteröffnung;
6) Öffnen der Fensterscheibe und Festziehen des oder jedes Befestigungsmittels;
7) Befestigen von einer oder mehreren hinsichtlich ihrer Länge einstellbaren Streben derart, dass diese die Fensterscheibe und den Kabinenrahmen miteinander verbinden.

12. Verfahren nach Anspruch 11, bei dem der Schritt 5) das Schließen der Fensterscheibe und das Ausrichten von einer oder mehreren Verbindungseinrichtungen derart einschließt, dass die Fensterscheibe mit der Rahmenöffnung ausgerichtet ist.

13. Verfahren nach Anspruch 11 oder 12, bei dem der Schritt 6) das aufeinanderfolgende Festziehen von oberen und unteren der Befestigungsmittel umfasst, die das zweite Element und den Umfangsteil miteinander verbinden.

## Revendications

1. Ensemble de fenêtre (10), d'une cabine, comprenant un panneau de fenêtre qui est supporté par rapport à une baie de fenêtre (13) définie par un ou plusieurs éléments de périmètre (12) fixés à ou faisant partie intégrante de la cabine, le panneau de fenêtre (14) étant mobile en rotation entre une position fermée dans laquelle il ferme la baie (13) et une position ouverte de la baie (13), un mécanisme d'articulation reliant le panneau de fenêtre (14) à un élément de périmètre (12 et un ou plusieurs accessoires (17a, 17b) supportés sur le mécanisme d'articulation, ledit mécanisme d'articulation incluant en plus une chaîne cinématique à quatre barres (19, 21, 22, 23) qui maintient généralement une orientation du ou de chaque accessoire indépendamment de la position en rotation du panneau de fenêtre (14) entre les positions fermée et ouverte, dans lequel la chaîne cinématique à quatre barres est une chaîne fermée comprenant un premier (19), un second (21), un troisième (22) et un quatrième (23) éléments reliés de façon articulée en série l'un à l'autre, le premier élément (19) étant fixé au panneau de fenêtre (14), le second élément (21) étant fixé à un élément de périmètre (12) et reliant les premier (19) et troisième (22) éléments, le troisième élément (22) reliant le second (21) et le quatrième (23) éléments, et le quatrième élément (23) reliant le premier (19) et le troisième (22) éléments, le ou chaque accessoire (17a, 17b) étant fixé de façon pivotante à l'articulation entre le troisième (22) et le quatrième (23) éléments et étant également fixé de façon pivotante au premier élément (19), et
**caractérisé en ce que** le premier (19), le second (21) et le quatrième (23) éléments de la chaîne à quatre barres sont généralement droits, et le troisième élément (22) est courbé à deux endroits pour définir trois parties d'élément (22a, 22b, 22c), le sens de courbure du troisième élément (22) s'inversant à chaque dit endroit.

2. Ensemble de fenêtre (10) selon la revendication 1, **caractérisé en ce que** le ou chaque accessoire (17a, 17b) est installé sur un support (18) qui est fixé de manière pivotante à l'articulation entre le troisième (22) et le quatrième (23) éléments et également fixé de manière pivotante au premier élément (19).

3. Ensemble de fenêtre (10) selon l'une quelconque des revendications précédentes, incluant un ou plusieurs montants ajustables en longueur reliant le panneau de fenêtre (14) à la cabine de telle sorte que, sur une majeure partie de la course parcourue par le panneau de fenêtre (14) entre les positions fermée et ouverte et vice-versa, le ou chaque montant procure une force de réaction qui tend à maintenir le panneau de fenêtre (11) dans une position entre les positions fermée et ouverte.

4. Ensemble de fenêtre (10) selon l'une quelconque des revendications précédentes, **caractérisé en ce que** chaque élément (19, 21, 22, 23) de la chaîne cinématique à quatre barres est relié de façon articulée à chaque extrémité à un autre dit élément.

5. Ensemble de fenêtre (10) selon l'une quelconque des revendications précédentes, **caractérisé en ce que** le premier élément (19) comprend une protubérance (24) qui fait saillie via un orifice façonné dans le panneau de fenêtre (14) pour permettre une fixation du premier élément (19) au panneau (14).

6. Ensemble de fenêtre (10) selon l'une quelconque des revendications précédentes, **caractérisé en ce que** le second élément (21) est allongé et inclut, fixé en rotation de façon à s'étendre le long de sa longueur (extend), un axe de charnière (26) auquel le premier élément (19) est fixé.

7. Ensemble de fenêtre (10) selon l'une quelconque des revendications précédentes, incluant une ou plusieurs fixations (27) fixant ensemble de façon rigide le second élément (21) à un élément de périmètre (12).

8. Ensemble de fenêtre (10) selon l'une quelconque des revendications précédentes, **caractérisé en ce que** le panneau de fenêtre (14) est ou inclut une vitre d'un matériau rigide, transparent.

9. Ensemble de fenêtre (10) selon l'une quelconque des revendications précédentes, **caractérisé en ce que** l'accessoire comprend une ou plusieurs lampes (17a, 17b) supportées sur le mécanisme d'articulation et connectées fonctionnellement en fonction d'une ou de plusieurs commandes de contrôle générées en fonction du réglage d'un ou plusieurs dispositifs de commande inclus dans ou reliés opérationnellement à la cabine.

10. Ensemble de fenêtre (10) selon la revendication 8 lorsqu'il est configuré sous forme de fenêtre avant, arrière ou latérale de la cabine d'un véhicule terrestre agricole, de transport routier, de chantier ou militaire, d'un bateau, d'un navire, d'un aéroglisseur, d'un aéronef ou d'une grue.

11. Procédé d'installation d'un ensemble de fenêtre tel que défini dans l'une quelconque des revendications précédentes, **caractérisé en ce qu'**il comprend les étapes consistant à :
1) assembler un ou plusieurs sous-ensembles de chaîne à quatre barres tels que décrits ci-dessus,
2) monter le ou chaque sous-ensemble de chaîne à quatre barres sur le panneau de fenêtre en utilisant une ou plusieurs fixations,
3) monter une ou plusieurs lampes ou d'autres accessoires sur chaque sous-ensemble de chaîne à quatre barres,
4) fixer le panneau de fenêtre et chaque sous-ensemble de chaîne à quatre barres monté sur un bâti de cabine en utilisant la une ou plusieurs fixations pour fixer ensemble le second élément de la chaîne à quatre barres et l'élément de périmètre,
5) ajuster le panneau de fenêtre et le sous-ensemble de chaîne à quatre barres dans l'ouverture du bâti,
6) ouvrir le panneau de fenêtre et serrer la ou chaque fixation de panneau,
7) monter un ou plusieurs montants ajustables en longueur de façon à relier le panneau de fenêtre au bâti de cabine.

12. Procédé selon la revendication 11, **caractérisé en ce que** l'étape 5) inclut l'opération consistant à fermer le panneau de fenêtre et régler un ou plusieurs moyens de montage de telle sorte que le panneau de fenêtre soit aligné avec l'ouverture du bâti.

13. Procédé d'installation selon la revendication 11 ou 12, **caractérisé en ce que** l'étape 6) inclut l'opération consistant à serrer tour à tour les dites fixations inférieure et supérieure fixant le second élément à l'élément de périmètre.
